## Europäisches Patentamt

## European Patent Office

## Office européen des brevets

(11) Veröffentlichungsnummer: **0 210 523**
**B1**

(12) **EUROPÄISCHE PATENTSCHRIFT**

(45) Veröffentlichungstag der Patentschrift:
27.09.89

(21) Anmeldenummer: 86109628.7

(22) Anmeldetag: 14.07.86

(51) Int. Cl.⁴: **G 01 L 9/04, G 01 L 5/16**

(54) **Einrichtung für Druck-, Normalkraft- und Biegungsmessungen an Rohrleitungen.**

(30) Priorität: **25.07.85 DE 3526663**

(43) Veröffentlichungstag der Anmeldung:
**04.02.87 Patentblatt 87/6**

(45) Bekanntmachung des Hinweises auf die Patenterteilung:
**27.09.89 Patentblatt 89/39**

(84) Benannte Vertragsstaaten:
**BE CH DE FR GB IT LI NL SE**

(56) Entgegenhaltungen:
**EP-A- 0 049 501**
**DE-A- 3 406 059**
**FR-A- 2 215 615**
**US-A- 2 420 148**
**US-A- 4 500 864**

(73) Patentinhaber: **Siemens Aktiengesellschaft,
Wittelsbacherplatz 2, D-8000 München 2 (DE)**

(72) Erfinder: **Kempf, Burkhard, Kettelerstrasse 32,
D-8752 Mömbris (DE)**

ACTORUM AG

**Beschreibung**

Die Erfindung betrifft eine Einrichtung zum Messen des Druckes, der Normalkraft und der Biegung in einem zylindrischen Hohlkörper, insbesondere in einem Rohr.

In der EP-A2, 3-49 501 wird der Druck in einer Leitung über an ihr angebrachte Dehnungsmeßstreifen unter Ausschaltung der Fehler durch Normalkraft und Biegung gemessen.

Demgegenüber soll eine erweiterte Information vorliegen, was durch Einzelanzeigen nach dem Anspruch 1 erreicht wird.

Die Signale der Dehnungsmeßstreifen werden mit bekannten Meßverstärkern verstärkt und in die Auswerteeinheit eingespeist, die unter Zugrundelegung der Werkstoffgesetze die Dehnungssignale in voneinander unabhängige Anteile unterteilt, die proportional der Belastungsgrößen Druck-, Normalkraft und Biegung sind. Falls die geometrischen Abmessungen und die Werkstoffkennwerte, wie E-Modul und Querkontraktionszahl mit berücksichtigt werden, werden die gesuchten Werte am Ausgang der Auswerteeinheit direkt erfaßt.

Die an sich bekannten Dehnungsmeßstreifen sind bei der erfindungsgemäßen Einrichtung auf gegenüberliegenden Seiten des Rohres in tangentialer und axialer Ausrichtung angeordnet. Beispielsweise sind vier in Längsrichtung messende Dehnungsmeßstreifen in 90° Abständen am Umfang eines Querschnittes verteilt und zwei in Umfangsrichtung messende Dehnungsmeßstreifen sind diametral zueinander in der Nähe von zwei in Längsrichtung messenden Dehnungsmeßstreifen angeordnet. Dadurch unterscheiden sich die Auswirkungen der Druckkräfte von den Auswirkungen der Biegespannungen auf die Anordnung der Dehnungsmeßstreifen.

Mit der erfindungsgemäßen Einrichtung wird der Vorteil erzielt, daß an einem Rohr, ohne dieses in seiner Funktion und Integrität durch Bohrungen, Druckmeßstutzen oder ähnliches zu verändern, der Druck, die Normalkraft und die Biegung separiert und getrennt angezeigt werden. Als Dehnungsmeßstreifen werden dabei nur marktübliche Typen verwendet.

Nach einem anderen Beispiel sind unterschiedlich lange Dehnungsleiterbahnen, die ein Meßgitter bilden, am Rohr tangential und axial in Serie angeordnet, wobei das Verhältnis von tangentialer und axialer Länge dem Verhältnis von 1 zur Querkontraktionszahl entspricht.

Das Signal eines solchen Meßgitters aus Dehnungsmeßstreifen ist nur dem Druck direkt proportional. Da die Einflüsse der anderen Belastungen bereits eliminiert sind, erübrigt sich eine aufwendige Auswerteeinheit.

Die Dehnungsmeßstreifen sind beispielsweise in der Form einer Doppelspirale angeordnet. Diese Anordnung hat den besonderen Vorteil, daß axiale und tangentiale Dehnungen auf eng begrenztem Raum meßbar sind.

Mit der Erfindung wird insbesondere der Vorteil erzielt, daß mit einer einfachen Auswerteeinheit eine komplexe Materialbeanspruchung nach den einzelnen Beanspruchungsarten separierbar ist. Man kommt dazu ohne Veränderungen am Rohr aus, wie es z.B. Druckmeßstutzen erfordern.

Die Erfindung soll nun anhand der Zeichnung erläutert werden:

Fig. 1 zeigt eine schematische Darstellung der erfindungsgemäßen Einrichtung.

Fig. 2 zeigt ein Rohr, auf dessen Oberfläche Dehnungsmeßstreifen der erfindungsgemäßen Einrichtung angeordnet sind.

Fig. 3 zeigt eine Doppelspirale aus Dehnungsmeßstreifen zur Druckmessung.

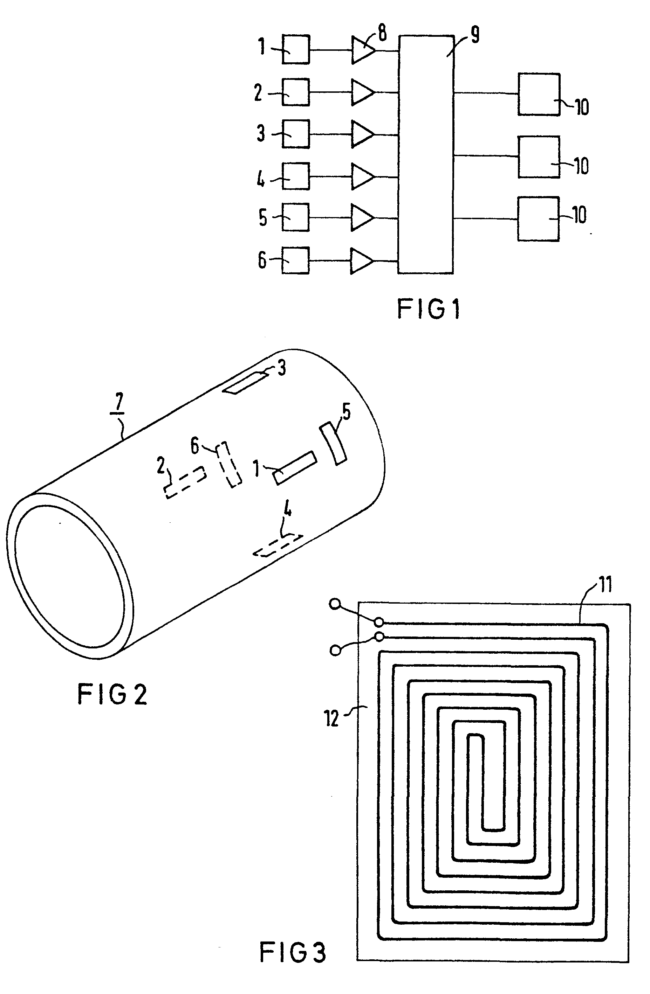

Zum Messen von Verformungen eines Rohres 7 nach Figur 2 befinden sich auf der Rohroberfläche Dehnungsmeßstreifen 1 bis 6. Vier Dehnungsmeßstreifen 1 bis 4 sind in Längsrichtung des Rohres 7 auf einem Umfang im Abstand von 90°·verteilt angeordnet. Sie geben bei einer axialen Dehnung des Rohres 7 ein Signal ab. Die beiden anderen Dehnungsmeßstreifen 5 und 6 sind in Umfangsrichtung einander gegenüberliegend in der Nähe der Dehnungsmeßstreifen 1 und 2 angeordnet. Sie geben bei einer tangentialen Dehnung des Rohres 7 ein Signal ab.

Die Dehnungsmeßstreifen 1 bis 6 sind nach Figur 1 über Meßverstärker 8 mit einer Auswerteeinheit 9 verbunden. Ausgänge der Auswerteeinheit 9 stehen mit Anzeigegeräten 10 oder mit Registriergeräten in Verbindung, denen die Werte des Druckes, der Normalkraft und der Biegung am Rohr 7 zugeführt werden.

Ein Dehnungsmeßstreifen 11 nach Figur 3 besteht aus unterschiedlich langen, abwechselnd axial und tangential am Rohr 7 verlaufende und in Serie geschaltete Dehnungsleiterbahnen. Die Summe der tangentialen Komponenten verhält sich dabei zur Summe der axialen Komponenten wie eins zur Querkontraktionszahl des Rohres 7. Der Dehnungsmeßstreifen 11 hat beispielsweise die Form einer Doppelspirale, die auf einer Trägerfolie 12 auf der Rohroberfläche angeordnet ist.

Bei Kenntnis der Empfindlichkeit des Dehnungsmeßstreifens 11, sowei der Materialwerte und der Rohrabmessungen, werden mit der erfindungsgemäßen Einrichtung Druck, Normalkraft und Biegung bestimmt. Eine Kalibrierung ist nicht erforderlich, erhöht jedoch die Genauigkeit.

Die Summe der tangentialen Dehnungsleiterbahnen 11 verhält sich zur Summe der axialen Dehnungsleiterbahnen 11 wie eins zur Querkontraktionszahl. Dadurch steht am Ausgang der Doppelspirale ein Signal an, das proportional zum Druck im Rohr 7 ist. Da beispielsweise für die meisten Rohrleitungen Werkstoffe mit einer Querkontraktionszahl 0,3 verwendet werden, wird ein 120 Ω-Dehnungsmeßstreifen derart aufgeteilt, daß Dehnungsleiterbahnen mit 92,3 Ω in tangentialer und mit 27,7 Ω in axialer Richtung am Rohr 7 angeordnet sind. Dadurch ist das Ausgangssignal am Dehnungsmeßstreifen 11 dem Druck im Inneren des Rohres 7 proportional.

**Patentansprüche**

1. Einrichtung zum Messen des Druckes, der Normalkraft und der Biegung in einem zylindrischen Hohlkörper (7), insbesondere in einem Rohr, wobei erste Dehnungsmeßstreifen (1 bis 4) am Hohlkörper (7) in axialer Richtung und zweite Dehnungsmeßstreifen (5, 6) in tangentialer Richtung angeordnet sind und mit den Dehnungsmeßstreifen (1 bis 6) eine Auswerteeinheit (9) verbunden ist, an deren Ausgang separate Werte (10) für Druck, Normalkraft und Biegung anstehen.

2. Einrichtung nach Anspruch 1, dadurch gekennzeichnet, daß am Hohlkörper (7) vier Dehnungsmeßstreifen (1 bis 4) in Längsrichtung in 90° Abständen am Umfang eines Querschnittes verteilt angeordnet sind und zwei Dehnungsmeßstreifen (5, 6) in Umfangsrichtung diametral und in der Nähe von zwei in Längsrichtung erstreckten Dehnungsmeßstreifen (1 und 2) angeordnet sind.

3. Einrichtung zum Messen des Druckes nach Anspruch 1, dadurch gekennzeichnet, daß unterschiedlich lange Dehnungsleiterbahnen eines Dehnungsmeßstreifens (11) innerhalb eines Meßgitters am Hohlkörper (7) tangential und axial in Serie angeordnet sind, wobei das Verhältnis von tangentialer und axialer Länge dem Verhältnis von eins zur Querkontraktionszahl des Rohres (7) entspricht.

4. Einrichtung nach Anspruch 3, dadurch gekennzeichnet, daß die Dehnungsleiterbahnen des Dehnungsmeßstreifens (11) in der Form einer Doppelspirale angeordnet sind.

**Claims**

1. Apparatus for measuring pressure, normal force and bending in a cylindrical hollow body (7), in particular in a pipe, whereby first strain measuring strips (1 to 4) are arranged on the hollow body (7) in the axial direction, second strain measuring strips (5, 6) are arranged in the tangential direction, and an evaluating unit (9) is connected to the strain measuring strips (1 to 6), with separate data (10) available at its output for pressure, normal force and bending.

2. Apparatus according to claim 1, characterised in that four strain measuring strips (1 to 4) are arranged on the hollow body (7) so that they are distributed in the longitudinal direction at 90° intervals on the periphery of a cross-section, and two strain measuring strips (5, 6) are arranged diametrically in the peripheral direction and near two strain measuring strips (1 and 2) which extend in the longitudinal direction.

3. Apparatus for measuring pressure according to claim 1, characterised in that strain conductor tracks, of different lengths, of a strain measuring strip (11) are arranged tangentially and axially in series inside a measuring grid on the hollow body (7), whereby the relationship of tangential length and axial length corresponds to the relationship of one to the Poisson's ratio of the pipe (7).

4. Apparatus according to claim 3, characterised in that the strain conductor tracks of the strain measuring strips (11) are arranged in the form of a double spiral.

**Revendications**

1. Dispositif pour la mesure de la pression, de la force normale et de la flexion dans un corps cylindrique creux (7), en particulier dans un tube, des premiers extensomètres (1 à 4) étant disposés sur le corps creux (7) dans la direction axiale et des seconds extensomètres (5, 6) étant disposés en direction tangentielle, alors qu'avec les extensomètres (1 à 6) est reliée une unité d'évaluation (9) à la sortie de laquelle se présentent des valeurs séparées (10) pour la pression, pour la force normale et pour la flexion.

2. Dispositif selon la revendication 1, caractérisé par le fait que sur le corps creux (7) sont disposés quatre extensomètres (1 à 4) dans la direction longitudinale et suivant une répartition de 90° sur la périphérie d'une section transversale, alors que deux extensomètres (5, 6) sont disposés diamétralement selon da direction périphérique et dans le voisinage de deux extensomètres (1 et 2) qui s'étendent dans la direction longitudinale.

3. Dispositif pour la mesure d'une pression selon la revendication 1, caractérisé par le fait que des pistes conductrices, de longueurs différentes, de la dilatation d'un extensomètre (11) sont disposées, à l'intérieur d'une grille de mesure, sur le corps creux (7), tangentiellement et en série, le rapport entre la longueur tangentielle et la longueur axiale correspondant au rapport entre un et le coefficient de contraction transversale du tube (7).

4. Dispositif selon la revendication 3, caractérisé par le fait que les pistes conductrices de la dilatation de l'extensomètre (11) sont disposées sous la forme d'une spirale double.

FIG 1

FIG 2

FIG 3